# FASCICULE DE BREVET EUROPEEN

(11) **EP 2 923 318 B1**
(45) Date de publication et mention de la délivrance du brevet: **10.01.2018**
(21) Numéro de dépôt: 13795468.1
(22) Date de dépôt: 21.11.2013
(51) Int. Cl.: G06Q 10/08, A45C 13/18, G01S 5/00, G01S 19/14, G06K 17/00

(54) **BAGAGE COMPORTANT UN MODULE DE GEOLOCALISATION ASSOCIE A UN MODULE DE COMMUNICATION**
LUGGAGE COMPRISING A GEO-POSITIONING MODULE COMBINED WITH A COMMUNICATION MODULE
GEPÄCKSTÜCK, DAS EIN MODUL ZUR GEOLOKALISIERUNG UMFASST, DAS MIT EINEM KOMMUNIKATIONSMODUL IN VERBINDUNG STEHT

(30) Priorité: 21.11.2012 EP 12193714; 28.01.2013 US 201361757676 P; 14.03.2013 US 201313826977
(43) Date de publication de la demande: 30.09.2015
(73) Titulaire: Dubarry, Franck Albert, 1963 Vetroz (CH)
(72) Inventeur: Dubarry, Franck Albert, 1963 Vetroz (CH)
(74) Mandataire: e-Patent SA
(86) Numéro de dépôt international: PCT/EP2013/074425
(87) Numéro de publication internationale: WO 2014/079956

(56) Documents cités:
- WO-A1-2008/151438
- WO-A1-2010/111399
- WO-A1-2010/127404
- US-A1- 2001 052 850
- US-A1- 2008 129 488
- US-A1- 2011 241 874

## Description

### Domaine technique

La présente invention concerne un bagage comportant une enveloppe, définissant un volume de chargement et, portant des circuits électroniques comprenant notamment un module de géolocalisation et un module de communication comprenant un dispositif interrupteur permettant sa désactivation par l'utilisateur indépendamment du reste des circuits électroniques. Les circuits électroniques présentent un mode de fonctionnement avion et comprennent en outre un module de détection agencé pour prendre des mesures d'au moins une grandeur physique et identifier des conditions correspondant à l'atterrissage d'un avion sur la base de ces mesures, les circuits électroniques étant agencés pour désactiver le module de communication dans le mode de fonctionnement avion, et commander le module de détection pour qu'il effectue des mesures espacées dans le temps, les circuits électroniques étant également agencés pour réactiver automatiquement le module de communication suite à l'identification de conditions correspondant à l'atterrissage d'un avion à partir de ces mesures.

### Etat de la technique

Des bagages portant des appareils de géolocalisation ont déjà été divulgués dans l'art antérieur. En effet, on peut vouloir suivre la position d'un bagage au cours du temps pour diverses raisons.

A titre d'exemple, la demande de brevet US 2008/0158002 décrit l'utilisation d'un appareil de géolocalisation, associé à un module de communication, notamment pour suivre la position d'un sac destiné à contenir de l'argent.

Par ailleurs, il est également connu de placer des appareils de localisation autonomes dans des bagages pour en suivre les déplacements.

Une autre motivation pour assurer un suivi d'un bagage est le risque de vol ou de perte lors de voyages, en particulier en avion.

Or, le voyage en avion pose des contraintes spécifiques, notamment en termes de communication avec des appareils électroniques. En effet, les appareils électroniques, de manière générale, doivent être mis hors tension lors du décollage et lors de l'atterrissage d'un avion pour éviter de perturber les instruments de navigation. En outre, les appareils susceptibles d'émettre des ondes électromagnétiques doivent être mis hors tension pendant toute la durée des vols.

Des appareils électroniques ont ainsi été développés qui mettent en oeuvre un procédé de détection d'un décollage ou d'un atterrissage d'avion pour automatiquement mettre hors tension l'appareil lorsqu'un décollage ou un atterrissage est identifié. Un tel procédé permet de mettre automatiquement l'appareil hors tension lorsque son utilisateur oublie de le faire manuellement. Un appareil de ce type est par exemple décrit dans le brevet US 5,815,407, qui concerne un livre électronique disposant d'un module de communication sans fil susceptible de perturber les instruments de navigation d'un avion.

Après sa mise hors tension automatique, ce livre électronique doit être remis sous tension par l'utilisateur, soit pendant le vol soit après l'atterrissage de l'avion.

Dans le cas d'un bagage à main, un tel procédé n'est pas adapté. En effet, si le bagage est perdu ou volé alors que l'utilisateur a oublié de remettre sous tension son appareil de géolocalisation après l'atterrissage de l'avion, l'appareil de géolocalisation est inutile et ne permet pas à l'utilisateur de retrouver son bagage.

Par ailleurs, un nombre important de bagages transportés dans les soutes d'avions sont perdus par leurs propriétaires chaque année. Or, la solution de l'art antérieur évoquée ci-dessus ne convient tout simplement pas, étant donné que l'utilisateur ne peut pas accéder à son bagage dès l'atterrissage de l'avion pour réactiver son appareil de géolocalisation. De ce fait, si le bagage est détourné pendant le transit avant le décollage ou après l'atterrissage, tandis que l'appareil de géolocalisation est hors tension, l'utilisateur ne dispose d'aucun moyen pour le localiser.

En outre, on relèvera que dans le cas d'un dysfonctionnement d'un appareil électronique mettant en oeuvre un procédé d'identification d'un décollage d'avion, dans le but de se désactiver automatiquement, il se peut que la désactivation ne soit pas effectuée correctement, ce qui pourrait poser de gros problèmes de sécurité, du fait des perturbations possibles que pourraient causer l'appareil aux instruments de navigation.

La demande de brevet US 2001/0052850 A1 décrit un dispositif de détection de proximité de bagages permettant au propriétaire de vérifier que ses bagages ont bien été embarqués dans son vol. Le but de ce dispositif est de pouvoir détecter le plus tôt possible un détournement éventuel d'un bagage, dans le but d'alerter la compagnie aérienne de ce fait et ainsi augmenter la probabilité de retrouver le bagage manquant, en commençant à le chercher le plus rapidement possible. Il est prévu de munir le détecteur de proximité de circuits de géolocalisation, dans le but de retracer les déplacements du bagage après l'avoir retrouvé. Ainsi, ces circuits ne sont pas mis à profit pour retrouver le bagage, et ce détecteur n'offre pas une garantie suffisante de parvenir à retrouver un bagage perdu, voire volé. En outre, ce détecteur de proximité comprend un module de communication devant être mis hors tension au moins lors des phases de décollage et d'atterrissage d'un avion, un procédé de détection du décollage et de l'atterrissage d'un avion étant prévu pour désactiver ce module de communication de manière automatique.

La demande de brevet WO 2008/151438 décrit un dispositif similaire à celui qui vient d'être décrit, mais fonctionnant à plus grande distance pour permettre de localiser le dispositif à la demande, par l'intermédiaire d'un module de communication. De même que dans le document précédent, une désactivation automatique du module de communication est prévue, notamment lorsque le décollage d'un avion est identifié.

### Divulgation de l'invention

Un but principal de la présente invention est de proposer une alternative aux appareils de géolocalisation pour bagages connus de l'art antérieur, en proposant un bagage muni d'un tel appareil dont le fonctionnement est plus sûr, tout en garantissant un niveau de sécurité élevé en référence au fonctionnement des instruments de navigation d'un avion.

A cet effet, la présente invention concerne plus particulièrement un bagage du type mentionné plus haut, caractérisé par le fait que les modules de géolocalisation et de communication sont agencés de telle manière qu'une information relative à la géolocalisation du bagage peut être accessible à distance pour un utilisateur, et par le fait que le mode de fonctionnement avion des circuits électroniques est susceptible d'être activé exclusivement
- en réponse à une action adaptée de l'utilisateur sur les circuits électroniques, ou
- comme suite à une programmation adaptée des circuits électroniques par l'utilisateur, préalablement à un transport du bagage par avion, basée sur au moins une heure prévue de décollage.

Grâce à ces caractéristiques, la position du bagage selon l'invention peut être suivie de manière sûre par son propriétaire étant donné qu'il décide du moment auquel il désactive son module de communication, par action sur son dispositif interrupteur indépendant, le module de géolocalisation restant actif, de même que le module de détection. La désactivation est effectuée soit en réponse à une action directe de l'utilisateur dans ce sens, peu de temps avant le vol, soit sur la base d'une heure de décollage préprogrammée, préférablement à un instant précédant l'heure prévue pour le décollage d'une durée prédéfinie. Le module de détection prend ensuite des mesures pour identifier l'atterrissage de l'avion et permettre ainsi une réactivation automatique du module de communication sans nécessiter d'intervention de l'utilisateur. De ce fait, même si le bagage est détourné de sa destination pendant le transit, son propriétaire aura accès à une information relative à sa position.

De manière préférée, les circuits électroniques comprennent au moins une entrée, pour permettre à l'utilisateur de leur transmettre des données, ainsi qu'une mémoire de stockage, destinée à stocker des informations relatives notamment aux dates et heures de décollage d'un ou de plusieurs vols planifiés. En outre, l'utilisateur peut également saisir les lieux de départ et d'arrivée de ces vols. Les circuits électroniques sont alors agencés pour désactiver le module de communication par action sur son dispositif interrupteur propre à un instant t1 précédant l'heure de décollage du prochain vol planifié d'une durée Δt1 prédéfinie.

De plus, le module de détection est avantageusement agencé pour identifier des conditions correspondant au décollage d'un avion, dans le mode avion, en effectuant des mesures espacées dans le temps, après l'instant t1. Les circuits électroniques sont alors agencés pour réactiver momentanément le module de communication si, après une durée Δt2 prédéfinie suivant l'heure de décollage prévue pour le prochain vol planifié, aucun décollage n'a été identifié à partir des mesures effectuées par le module de détection, de manière à rendre accessible, pour un utilisateur distant, une information relative à la position du bagage.

De manière avantageuse, on peut prévoir en outre que les circuits électroniques sont agencés pour réactiver momentanément le module de communication de manière périodique, après expiration de la durée prédéfinie Δt2 et jusqu'à ce qu'un décollage soit identifié, de manière à rendre accessible de manière périodique, pour un utilisateur distant, une information relative à la position du bagage.

Grâce à ces caractéristiques supplémentaires, le bagage selon l'invention présente un niveau de sécurité optimal. En effet, celles-ci permettent également d'assurer un suivi de la position du bagage dans le cas où ce dernier serait détourné de sa destination avant le décollage de l'avion.

Selon un mode de réalisation préféré, les circuits électroniques sont en outre agencés pour mettre le module de détection dans un mode de veille après identification d'un décollage et jusqu'à un instant t3 précédant d'une durée Δt3 prédéfinie l'heure prévue pour l'atterrissage suivant, telle que stockée dans la mémoire de stockage, à partir duquel les circuits électroniques ressortent le module de détection de son mode de veille pour que ce dernier effectue des mesures permettant d'identifier des conditions correspondant à l'atterrissage de l'avion.

Grâce à ces caractéristiques supplémentaires, l'autonomie de suivi du bagage selon l'invention peut être augmentée, par optimisation de sa consommation énergétique.

L'autonomie peut encore être améliorée si l'on prévoit de plus que les circuits électroniques sont agencés pour stocker la valeur de l'instant t2 auquel un décollage est identifié, dans la mémoire de stockage, et pour calculer la différence entre l'instant t2 et la valeur attendue pour l'instant du décollage telle que stockée par un utilisateur dans la mémoire de stockage, et effectuer une estimation d'une heure modifiée pour l'atterrissage de l'avion, en référence à l'heure d'atterrissage telle que stockée par l'utilisateur dans la mémoire de stockage.

Ainsi, les circuits électroniques sont avantageusement agencés pour adapter l'instant t3 de sortie du mode de veille du module de détection en prenant en compte l'estimation d'une heure modifiée pour l'atterrissage de l'avion.

Par ailleurs, de manière générale, le module de détection est préférablement muni d'au moins un capteur ou d'une combinaison de capteurs pris dans le groupe comprenant un capteur de pression, un accéléromètre, un capteur de position par satellite, un capteur de température.

De plus, de manière avantageuse, le bagage peut comporter un système de détection d'effraction, les circuits électroniques étant agencés de telle manière qu'une information relative à une effraction ou tentative d'effraction du bagage puisse être accessible à distance pour un utilisateur, soit dès la détection de l'effraction ou la tentative d'effraction si les circuits électroniques sont dans un mode de fonctionnement autre que le mode avion, soit dès réactivation du module de communication si l'effraction ou la tentative d'effraction intervient tandis que les circuits électroniques sont en mode avion.

De manière générale, le module de communication est susceptible de transmettre des messages via un réseau téléphonique de type GSM. En particulier, il peut avantageusement émettre un message à destination d'un numéro prédéfini suite à une effraction ou tentative d'effraction.

Par ailleurs, le bagage comporte préférablement un support relié de manière amovible à l'enveloppe et portant l'ensemble des circuits électroniques ainsi qu'une source d'énergie électrique destinée à assurer le fonctionnement des circuits électroniques, la liaison entre le support et l'enveloppe étant verrouillée par une clé électronique.

L'invention concerne également un procédé de suivi d'un vol en avion pour un bagage du type qui vient d'être décrit, comportant notamment les étapes consistant à:
a) assurer un fonctionnement des circuits électroniques, en dehors du mode de fonctionnement avion, tel qu'une information relative à la géolocalisation du bagage puisse être accessible à distance pour un utilisateur,
b) éventuellement saisir des données relatives à au moins un vol en avion planifié pour les stocker dans la mémoire de stockage,
c) faire passer les circuits électroniques dans le mode de fonctionnement avion en désactivant le module de communication, par action sur son dispositif interrupteur propre, préalablement au vol planifié, exclusivement
   - en réponse à une action adaptée de l'utilisateur sur les circuits électroniques, ou
   - comme suite à la saisie des données de l'étape b), préalablement à un transport du bagage par avion et sur la base d'au moins une heure prévue de décollage.

Le procédé selon l'invention peut comporter des étapes supplémentaires dans des variantes de réalisation.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1 représente une vue générale simplifiée d'un bagage selon un mode de réalisation préféré de la présente invention;
- la figure 2 représente un diagramme illustrant la structure d'un détail de construction du bagage selon un mode de réalisation préféré de la présente invention;
- la figure 3 représente un schéma blocs illustrant un premier aspect du fonctionnement du bagage selon un mode de réalisation préféré de la présente invention;
- la figure 4 représente un diagramme illustrant le comportement de la pression régnant dans la cabine d'un avion tout au long d'un vol et en fonction des phases de vol de l'avion;
- la figure 5 représente un schéma blocs illustrant un second aspect du fonctionnement du bagage selon un mode de réalisation préféré de la présente invention;
- la figure 6 représente un schéma blocs illustrant un troisième aspect du fonctionnement du bagage selon un mode de réalisation préféré de la présente invention, et
- la figure 7 représente un schéma blocs illustrant un quatrième aspect du fonctionnement du bagage selon un mode de réalisation préféré de la présente invention.

### Mode(s) de réalisation de l'invention

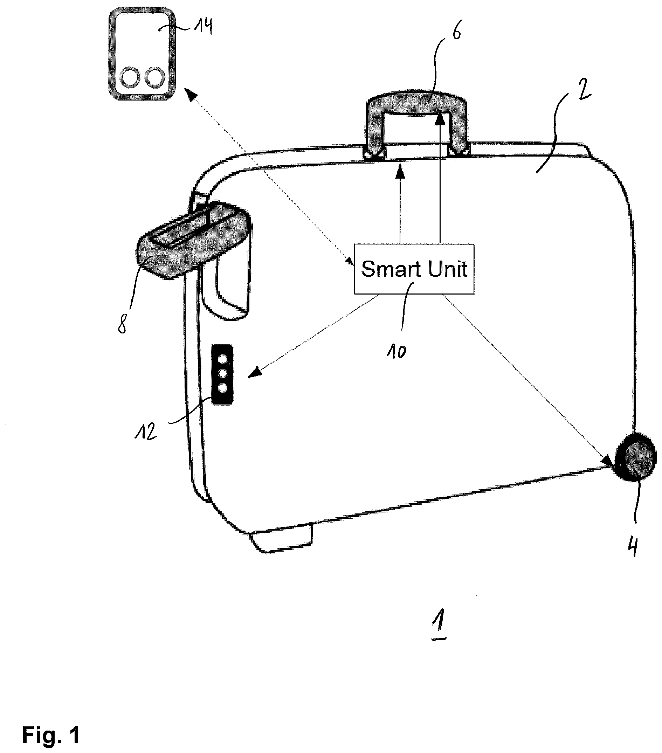

La figure 1 représente une vue générale simplifiée d'un bagage selon un mode de réalisation préféré de la présente invention, le bagage présentant ici la forme d'une valise 1, à titre illustratif non limitatif.

La valise 1 comporte une enveloppe 2 qui peut être souple ou, préférablement, rigide. L'enveloppe 2 définit un volume interne de chargement.

De manière avantageuse, la valise 1 est munie de roulettes 4 ainsi que d'une première poignée 6 permettant de la porter et d'une seconde poignée 8 permettant de la faire rouler au moyen de ses roulettes. La structure illustrée et décrite pour la valise 1 est bien entendu purement illustrative et non limitative. L'homme du métier pourra la réaliser de toute autre manière connue adaptée à la mise en oeuvre de la présente invention.

Par ailleurs, la valise 1 comprend des circuits électroniques destinés à assurer plusieurs fonctions qui seront décrites plus loin. De manière avantageuse, l'ensemble de ces circuits est regroupé sur un support qui sera appelé Smart Unit 10 dans la suite du texte.

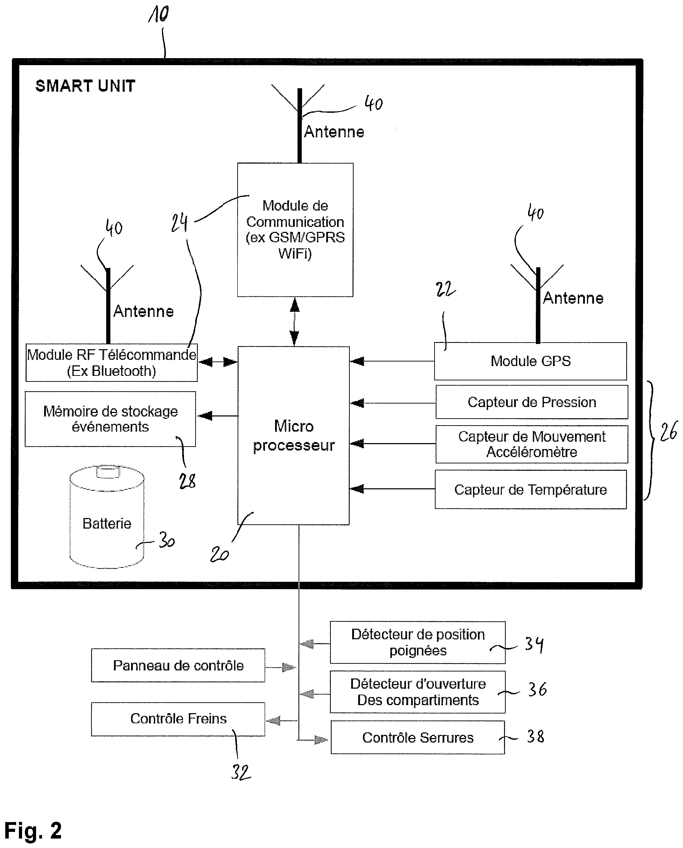

La figure 2 représente un diagramme illustrant la structure de la Smart Unit 10 selon un mode de réalisation préféré de la présente invention.

La Smart Unit 10 est préférablement intégrée à l'enveloppe 2 de manière amovible, en étant verrouillée au moyen d'une clé mécanique ou, préférablement, électronique. Ainsi, seul le propriétaire de la valise 1 peut extraire la Smart Unit 10 de l'enveloppe 2, en particulier s'il utilise la valise 1 comme bagage à main et qu'il doit passer un portique de sécurité d'aéroport. Il peut alors la sortir de l'enveloppe pour la faire passer au scanner à rayons X dans un bac, à la manière d'un ordinateur portable.

La Smart Unit 10 comprend avantageusement un ensemble de circuits électroniques, gérés par un microprocesseur 20 et, comprenant notamment un module de géolocalisation 22, un module de communication 24, un module de détection 26 et une mémoire de stockage 28 dont le fonctionnement sera détaillé plus loin, ainsi qu'une batterie 30, destinée à alimenter l'ensemble des circuits électroniques et un panneau de contrôle (référence numérique 12 sur la figure 1).

En outre, suivant une variante de réalisation préférée de la valise 1, celle-ci peut être munie de freins 32 agissant sur les roulettes 4, de détecteurs de position 34 pour les poignées, de détecteurs 36 d'ouverture des compartiments de la valise, et de contrôleurs 38 pour les serrures, tous ces éléments étant connectés au microprocesseur 20. Ces derniers éléments définissent ensemble un module de détection d'une effraction ou d'une tentative d'effraction.

De plus, des antennes 40 sont prévues pour assurer la transmission sans fil entre les différents modules communiquant de la Smart Unit 10 et des émetteurs ou récepteurs distants.

Le module de géolocalisation 22 peut être de tout type connu, par exemple il peut comporter un récepteur de type GPS, et l'homme du métier ne rencontrera pas de difficulté particulière pour en choisir un parmi les modèles disponibles sur le marché en fonction de ses besoins. De manière préférée, le module de géolocalisation 22 permet de mesurer les coordonnées géographiques ainsi que la vitesse et l'altitude.

Le module de communication 24 comporte préférablement, mais de manière non limitative, un module de transmission RF (radiofréquences) de type GSM/GPRS, c'est-à-dire qu'il est capable d'échanger des données via le réseau téléphonique standard. Bien entendu, un module de transmission pour le réseau Iridium, par exemple, est envisageable mais moins avantageux du point de vue des coûts de communication.

Le module de communication 24 permet au microprocesseur 20 d'envoyer des données à un serveur distant et/ou à un téléphone du propriétaire de la valise 1, par exemple via l'envoi de SMS ("Short Message Service"). Il permet également au microprocesseur de recevoir des notifications et/ou des commandes par l'intermédiaire de SMS ou de messages vocaux.

En outre, le module de communication peut également se connecter à un serveur centralisé distant pour procéder à l'échange d'informations sous formes de données.

On notera que les commandes peuvent être des requêtes de localisation ou d'autres types de commandes permettant par exemple de contrôler le bagage, comme le déblocage d'un ou de plusieurs compartiments, le changement de codes d'accès ou toute autre commande affectant le mode de fonctionnement du bagage.

De manière avantageuse, le module de communication comporte également des circuits permettant d'échanger des données à courte distance, par le biais des normes Wi-Fi et/ou Bluetooth.

Ces processeurs permettent au bagage d'échanger des informations avec une télécommande optionnelle (référence numérique 14 sur la figure 1) ou encore avec un téléphone compatible avec les normes Wi-Fi et/ou Bluetooth, voire avec un ordinateur.

Grâce à ces caractéristiques, il est possible pour l'utilisateur de saisir des données à stocker en mémoire ou encore de contrôler notamment les ouvertures de sa valise ou les codes permettant de les verrouiller.

Le panneau de contrôle 12 et le module de communication 24 définissent des entrées permettant de transmettre des informations ou commandes au microprocesseur 20.

En particulier, il est possible pour le propriétaire de la valise 1 de transmettre au microprocesseur 20 des informations relatives notamment aux dates et heures de décollage d'un ou de plusieurs vols planifiés, ces informations étant alors stockées dans la mémoire de stockage 28. Les heures prévues pour les atterrissages correspondants peuvent également être stockées dans la mémoire de stockage 28.

Le module de détection 26 comprend au moins un capteur, préférablement un ensemble de capteurs, pour mesurer la pression, la température et l'accélération.

Pour des raisons d'optimisation de la consommation énergétique, le microprocesseur peut activer ou désactiver chacun des capteurs individuellement, en fonction de paramètres de configuration (à la demande de l'utilisateur ou en fonction de modes de fonctionnement prédéfinis des circuits électroniques).

On notera à ce stade que les capteurs environnementaux du module de détection 26, le module de géolocalisation 22 et le microprocesseur 20 ne produisent pas d'émission susceptible de perturber les instruments de navigation d'un avion. Seules les fonctions d'émission du module de communication 24, y compris à courte distance, doivent être désactivées pendant un vol en avion car elles sont susceptibles de perturber les instruments de navigation. De ce fait, la présente invention prévoit de munir le module de communication 24 de son propre dispositif interrupteur. Ainsi, le module de communication seul peut être désactivé tandis que les autres circuits électroniques restent en fonction, dans un mode avion.

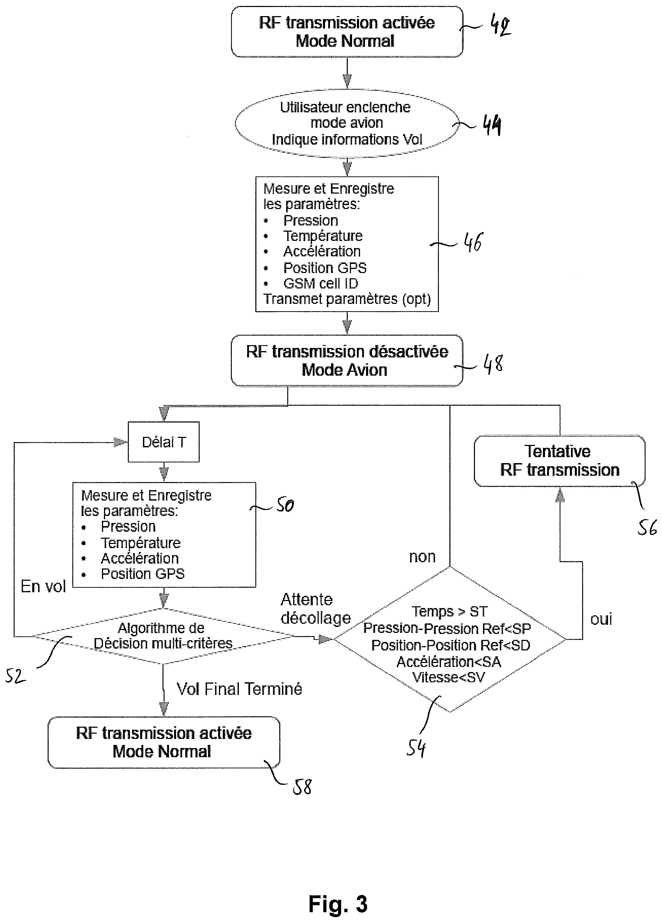

La figure 3 représente un schéma blocs illustrant le fonctionnement des circuits électroniques selon un mode de réalisation préféré de la présente invention, notamment comment le fonctionnement du module de communication est géré en fonction des paramètres relatifs à un vol en avion.

Le premier bloc 42 correspond au fonctionnement des circuits électroniques dans un mode normal, c'est-à-dire avec le module de communication 24 activé.

Une information relative à la position de la valise 1, notamment, est accessible à distance pour son propriétaire, soit en étant périodiquement transmise à un serveur central, soit en réponse à une requête adressée au microprocesseur par le propriétaire, à partir d'un téléphone ou d'un ordinateur.

Par ailleurs, au bloc 44, le propriétaire de la valise 1 peut saisir des informations relatives à un ou plusieurs vols en avion planifiés, incluant des informations relatives à des escales éventuelles, qui pourront alors être considérées comme plusieurs vols successifs pour les besoins de l'algorithme mis en oeuvre dans le fonctionnement des circuits électroniques. Il est possible de prévoir que cette saisie est réalisée par l'intermédiaire du panneau de contrôle 12 pour peu que ce dernier possède des moyens d'entrée adaptés (touches et/ou écran tactile), mais elle peut être réalisée, en complément ou en alternative, à partir d'un téléphone ou d'un ordinateur connecté à la valise soit par le réseau téléphonique, soit par les connections sans fil à courte distance, c'est-à-dire WiFi ou Bluetooth.

Peu de temps avant l'heure prévue pour le prochain vol planifié, à un instant t1 précédant l'heure prévue pour le décollage du prochain vol planifié d'une durée Δt1 prédéfinie, par exemple une heure, les valeurs de différentes grandeurs environnementales, à savoir la pression, la température, l'accélération, la position et l'identification de la cellule GSM, sont mesurées par le module de détection 26, au bloc 46, avant d'être enregistrées en tant que valeurs de référence dans la mémoire de stockage 28.

Ces valeurs de référence peuvent éventuellement être transmises à un serveur central distant, suivant la configuration du système global.

Le microprocesseur commande alors le dispositif interrupteur propre du module de communication 24 pour désactiver ce dernier, au bloc 48, désactivant ainsi toutes les sources de transmission, ce qui revient à mettre les circuits électroniques dans le mode avion. En alternative, l'utilisateur peut forcer le passage immédiat en mode avion par transmission d'une instruction adaptée au microprocesseur 20.

Après l'instant t1, éventuellement suite à un certain délai T prédéfini, des mesures des paramètres environnementaux espacées dans le temps sont effectuées par le module de détection 26, préférablement de manière périodique, au bloc 50.

En alternative, on peut aussi prévoir que les circuits électroniques sont mis en mode avion directement par l'utilisateur, par exemple lorsqu'il termine la saisie des vols planifiés ou encore ultérieurement, par une action sur le panneau de contrôle 12 voire par transmission d'une commande adaptée via le module de communication 24.

Un algorithme de décision multicritères 52, composé de plusieurs algorithmes combinés dont chacun est appliqué à l'une des grandeurs physiques faisant l'objet de mesures, est appliqué aux résultats de ces mesures pour identifier un décollage de l'avion. Ces différents algorithmes seront exposés plus en détail en relation avec la description détaillée des figures suivantes.

Les mesures effectuées sont comparées aux mesures de référence stockées dans la mémoire 28. Des valeurs seuil de variation des grandeurs physiques mesurées sont également stockées dans la mémoire 28, pour définir des critères permettant d'identifier un décollage ou un atterrissage.

Si après une durée Δt2 prédéfinie, aucune des grandeurs physiques mesurées n'a subi une variation supérieure à la valeur seuil correspondante, conformément aux indications du bloc 54, le microprocesseur 20 réactive momentanément le module de communication 24 pour transmettre au moins la position du bagage à un serveur distant ou au téléphone du propriétaire du bagage, avant de le désactiver à nouveau, comme illustré au bloc 56.

Cette opération est répétée de manière périodique aussi longtemps qu'un décollage n'est pas identifié sur la base des mesures effectuées par le module de détection 26.

Si l'une au moins des grandeurs physiques mesurées présente une variation supérieure à la valeur seuil correspondante, le module de détection poursuit ses mesures périodiques pour confirmer l'identification d'un décollage, sans que le module de communication 24 ne soit réactivé.

Une fois le décollage identifié, le module de détection 26 continue de prendre des mesures périodiques pendant le vol pour identifier l'atterrissage de l'avion (bloc 50). Suivant une alternative de réalisation préférée, le module de détection 26 est placé en veille pendant la plus grande partie du vol pour optimiser l'autonomie de la batterie 30. Le microprocesseur réactive préférablement le module de détection 26 pour que ce dernier reprenne ses mesures périodiques à un instant t3, précédant d'une durée Δt3 prédéfinie l'heure prévue pour l'atterrissage suivant telle que stockée dans la mémoire de stockage 28.

Il est possible de prévoir que les circuits électroniques appliquent un facteur de correction sur la valeur de l'instant t3 pour en estimer une valeur modifiée en fonction de l'instant t2 auquel le décollage a effectivement lieu, lorsque l'instant t2 est très éloigné de la valeur attendue, telle que stockée dans la mémoire de stockage 28. L'homme du métier ne rencontrera pas de difficulté particulière pour définir un algorithme de correction de cette valeur t3 en fonction de ses propres besoins.

Lorsque l'atterrissage est identifié, sur la base d'un algorithme de décision multicritères similaire à celui mis en oeuvre pour identifier le décollage, le microprocesseur 20 réactive le module de communication 24, les circuits électroniques sortant ainsi du mode avion pour reprendre un mode de fonctionnement normal, tel que décrit plus haut et illustré au bloc 58.

Différents types d'algorithmes susceptibles de permettre l'identification d'un décollage ou d'un atterrissage d'avion vont à présent être décrits, de manière illustrative non limitative.

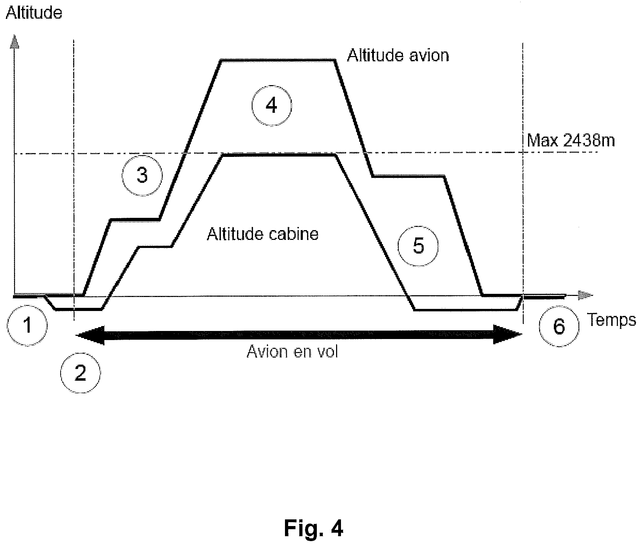

La figure 4 représente un diagramme schématique illustrant le comportement de la pression régnant dans la cabine d'un avion tout au long d'un vol et en fonction de l'altitude de vol de l'avion. La pression est exprimée en équivalent d'altitude sur la figure 4 pour faciliter la compréhension.

Lors d'un vol, la cabine d'un avion de même que ses soutes sont pressurisées afin de garantir le confort des passagers.

L'altitude à laquelle évolue un avion est illustrée par la courbe 60 sur la figure 4.

La courbe 60 présente six portions successives repérées par les chiffres encerclés allant de 1 à 6, et correspondant aux situations suivantes:
1/ l'avion est au sol;
2/ l'avion est encore au sol puis décolle;
3/ l'avion est phase d'ascension;
4/ l'avion se trouve à son altitude de croisière;
5/ l'avion est en phase de descente, et
6/ l'avion est au sol.

La courbe 62 illustre de manière schématique le comportement correspondant de la pression dans la cabine et les soutes de l'avion pendant les six phases qui viennent d'être énumérées.

Avant le décollage, la pression interne est égale à la pression au sol.

Peu de temps avant le décollage, la cabine est mise en légère surpression, visible sur la portion 2 de la courbe 62.

Pendant la phase d'ascension de l'avion, la pression diminue régulièrement mais rapidement dans la cabine, par paliers, jusqu'à atteindre une pression de croisière, au niveau de la portion 4 de la courbe 62. A l'altitude de croisière de l'avion, la pression interne reste constante, tout en restant supérieure à un seuil minimum correspondant à une altitude de l'ordre de 2400 mètres.

Pendant la descente de l'avion, la pression interne augmente régulièrement mais rapidement jusqu'à atteindre un niveau légèrement supérieur à celui de la pression au sol.

Après l'atterrissage, les pressions interne et externe sont égalisées.

A partir de ces explications, on peut définir un algorithme d'identification d'un décollage et/ou d'un atterrissage d'un avion, sur la base de résultats de mesures de la pression dans la cabine ou dans les soutes de l'avion.

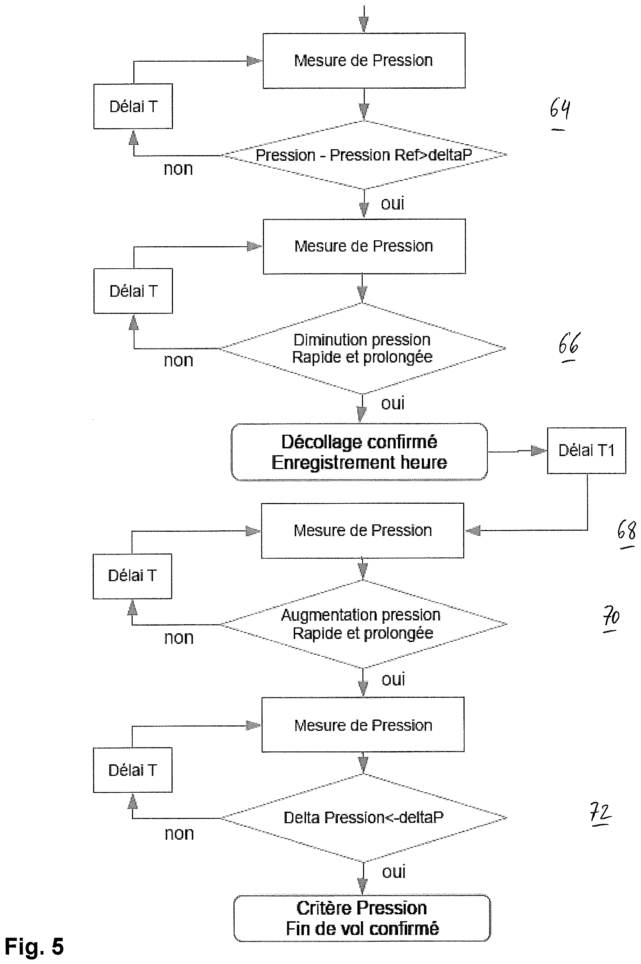

Un exemple d'un tel algorithme est schématiquement illustré sur la figure 5, sous la forme d'un schéma blocs, de manière non limitative.

Comme mentionné plus haut, quelques temps avant l'heure prévue pour le prochain décollage, le module de détection 26 commence à effectuer des mesures périodiques de différentes grandeurs physiques, notamment de la pression.

La figure 5 illustre, en 64, le fait que le module de détection 26 effectue une première boucle de mesures périodiques tant que la pression ne diminue pas au-delà d'un certain seuil prédéfini.

Lorsqu'une diminution rapide et prolongée de la pression est mesurée, en 66, les caractéristiques d'un décollage sont identifiées et le décollage est confirmé. L'heure du décollage est en outre stockée dans la mémoire de stockage 28.

Le module de détection est ensuite avantageusement mis dans un mode de veille dans lequel il prend des mesures avec une période réduite, voire dans lequel il ne prend plus de mesure. Il est réactivé, en 68, pour prendre des mesures à période plus élevée passé un délai T1, correspondant à un instant t3 précédant d'une durée Δt3 prédéfinie l'heure prévue pour l'atterrissage suivant, dans le but d'identifier les conditions correspondant à l'atterrissage.

Après avoir identifié une phase d'augmentation de la pression due à la descente, en 70, le module de détection 26 examine si celle-ci remonte légèrement ensuite, en 72, pour valider l'identification de l'atterrissage, conformément à la portion 6 de la courbe 62 sur la figure 4.

L'atterrissage d'un avion peut par conséquent être identifié grâce à un algorithme de ce type, basé sur des mesures de pression.

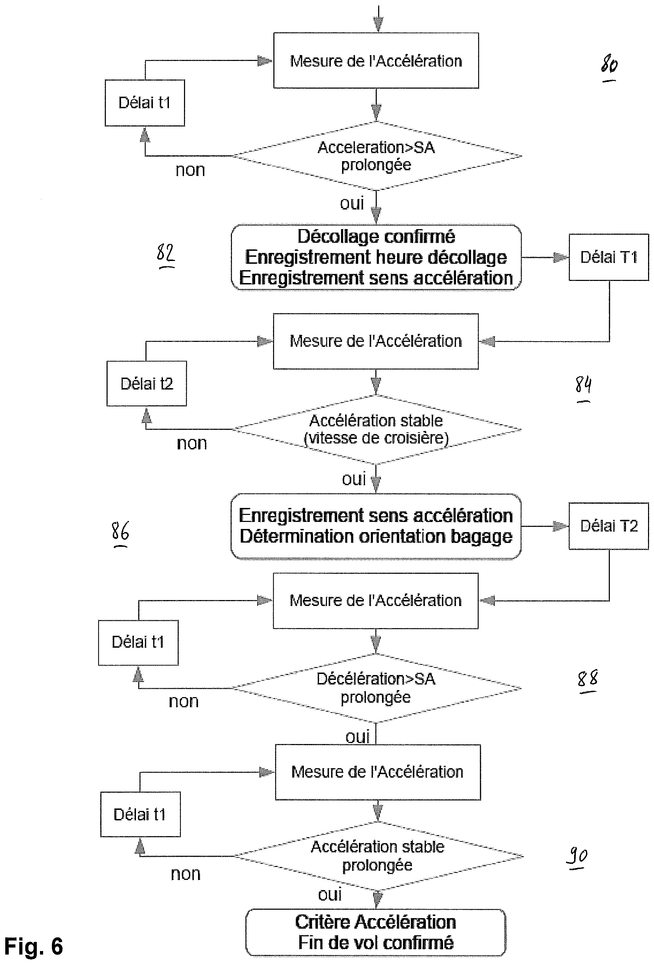

La figure 6 illustre, sous forme de schéma blocs, la mise en oeuvre d'un algorithme basé sur des mesures d'accélérations, en alternative ou, préférablement en complément, à l'algorithme qui vient d'être décrit.

Le décollage d'un avion est caractérisé par une accélération horizontale combinée à une accélération verticale. Ces accélérations se maintiennent jusqu'à ce que l'avion atteigne sa vitesse de croisière.

Avant le décollage, lorsque le bagage est stocké en soute ou en cabine, son accélération est nulle pendant un certain temps, ce qui permet de calibrer l'accéléromètre sur ses trois axes de mesures.

En phase de recherche du décollage, le module de détection 26 mesure l'accélération de manière périodique, en 80.

Pendant le roulage de l'avion, l'accélération mesurée est variable avec des vibrations dues aux mouvements de l'appareil et aux vibrations des moteurs.

Lors du décollage, l'accélération est forte et permet de déterminer l'orientation du bagage par rapport à l'avant et à l'arrière de l'avion. Lorsque cette forte accélération est détectée pendant une certaine durée (caractéristique de l'accélération de décollage d'un avion), le décollage est confirmé, en 82.

L'heure de décollage est déterminée et enregistrée dans la mémoire de stockage 28. Une heure probable d'arrivée est estimée en fonction de l'heure de décollage effective, et des heures de décollage et d'atterrissage telles que saisies par l'utilisateur dans la mémoire de stockage 28 avant le vol. Cette heure d'arrivée estimée est comparée à d'autres valeurs d'heure d'arrivée estimées à partir des mesures effectuées par les autres capteurs du module de détection 26.

Quelques valeurs de l'accélération peuvent éventuellement être mesurées pendant le vol, en 84, pour vérifier que l'avion est toujours en vitesse de croisière constante et pour confirmer l'orientation du bagage, en 86. De manière préférée, l'accéléromètre peut être mis en mode de veille le reste du vol, sensiblement jusqu'à l'instant t3 défini plus haut, instant auquel il est réactivé pour détecter l'atterrissage de l'avion.

Pendant la phase de descente, une décélération à composantes verticale et horizontale est détectée, en 88.

A l'arrivée au point de déchargement, l'accélération se stabilise puis devient nulle, en 90, en attendant le déchargement. Le microprocesseur peut alors valider l'identification de l'atterrissage sur la base des mesures d'accélérations effectuées par le module de détection 26.

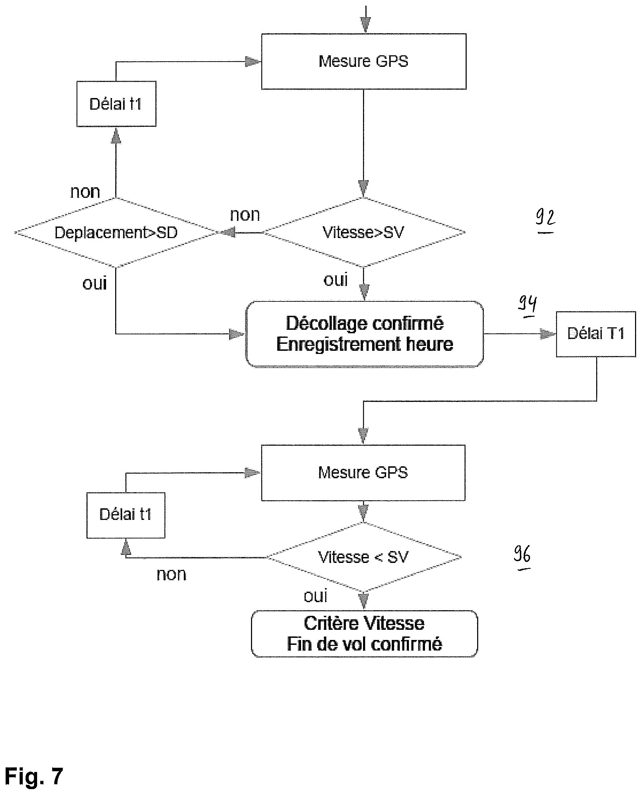

La figure 7 illustre, sous forme de schéma blocs, la mise en oeuvre d'un troisième algorithme basé sur des mesures de position par récepteur de géolocalisation de type GPS, en alternative ou, préférablement en complément, aux algorithmes déjà décrits. La vitesse peut également être déterminée à partir des mesures de positions.

Contrairement aux autres grandeurs physiques, la position mesurée par GPS peut ne pas être déterminée si les conditions de réception des signaux satellites ne sont pas suffisantes. Aussi, en cas de mauvaise réception, la mise en oeuvre de cet algorithme supplémentaire peut ne pas être effectuée.

Avant le vol, l'utilisateur saisit le trajet du vol qu'il planifie, ce qui permet de déterminer la localisation du point de départ du vol.

Peu avant le décollage, le microprocesseur détermine la vitesse du bagage grâce aux mesures de positions, en 92. En effet, le décollage de l'avion est caractérisé par une forte vitesse et la détermination d'une telle vitesse permet d'identifier l'instant du décollage. L'heure effective du décollage est enregistrée dans la mémoire de stockage 28, en 94, et une heure d'arrivée est estimée, comme décrit plus haut.

Si l'information relative à la vitesse n'est pas disponible avant le décollage ou pendant le vol, une information ultérieure relative à la localisation permet, dès qu'elle est disponible, de calculer une distance en référence au point de départ et peut éventuellement suffire à confirmer que le décollage a bien eu lieu. L'heure d'arrivée peut également être estimée sur la base de cette mesure.

La détection ultérieure d'une valeur de la vitesse inférieure à un certain seuil prédéfini, en 96, permet à tout moment de confirmer que l'atterrissage a bien eu lieu.

La comparaison de la position du bagage après l'atterrissage avec la position attendue telle que stockée en mémoire permet de vérifier que le bagage se trouve bien à l'endroit prévu et, le cas échéant, de générer une alerte à l'attention du propriétaire si ça n'est pas le cas. Une fois que l'atterrissage est identifié, le microprocesseur réactive le module de communication 24 et l'alerte peut être transmise à un serveur central distant et/ou au téléphone du propriétaire du bagage.

Ainsi, la combinaison des mesures effectuées par les différents types de capteurs du module de détection 26 permet de confirmer les différentes étapes du voyage par des méthodes indépendantes et garantit une grande fiabilité du suivi du bagage selon la présente invention. En outre, l'utilisation conjointe de ces critères distincts permet de garantir que la sortie du mode avion du module de communication 24 ne peut se faire que dans le cas où le bagage est effectivement au sol et qu'il n'y a pas de risque de perturber les instruments de navigation de l'avion.

De manière similaire, si une effraction ou une tentative d'effraction est détectée par l'un des détecteurs 36 ou 38 alors que les circuits électroniques sont en mode avion, une alerte est générée mais n'est envoyée à un serveur central distant ou au propriétaire du bagage qu'après réactivation du module de communication 24.

La description qui précède s'attache à décrire un mode de réalisation particulier à titre d'illustration non limitative et, l'invention n'est pas limitée à la mise en oeuvre de certaines caractéristiques particulières qui viennent d'être décrites, comme par exemple la forme et la structure du bagage tel qu'il est illustré et décrit ou encore les aspects de sa configuration relatifs à des éléments n'ayant pas d'impact direct sur le procédé de localisation du bagage et la gestion du mode avion.

L'homme du métier ne rencontrera pas de difficulté particulière pour adapter le contenu de la présente divulgation à ses propres besoins et mettre en oeuvre un bagage répondant seulement en partie aux caractéristiques mentionnées dans la présente demande, disposant d'un module de géolocalisation associé à un module de communication, ce dernier étant mis en mode avion avant le décollage d'un avion, indépendamment des autres circuits électroniques et exclusivement sur la base d'une saisie de l'utilisateur, immédiatement ou avec retardement, puis réactivé après identification de l'atterrissage de l'avion, sur la base de mesures effectuées par un module de détection.

## Revendications

1. Bagage (1) comportant une enveloppe (2), définissant un volume de chargement et, portant des circuits électroniques (10) comprenant notamment un module de géolocalisation (22) ainsi qu'un module de communication (24) comprenant un dispositif interrupteur permettant sa désactivation par l'utilisateur indépendamment du reste desdits circuits électroniques, lesdits circuits électroniques (10) présentant un mode de fonctionnement avion et comprenant en outre un module de détection (26), agencé pour prendre des mesures d'au moins une grandeur physique et identifier des conditions correspondant à l'atterrissage d'un avion sur la base de ces mesures, lesdits circuits électroniques (10) étant agencés pour désactiver ledit module de communication (24) dans ledit mode de fonctionnement avion, et commander ledit module de détection (26) pour qu'il effectue des mesures espacées dans le temps, lesdits circuits électroniques (10) étant également agencés pour réactiver automatiquement ledit module de communication (24) suite à l'identification de conditions correspondant à l'atterrissage d'un avion à partir desdites mesures,
**caractérisé en ce que** lesdits modules de géolocalisation (22) et de communication (24) sont agencés de telle manière qu'une information relative à la géolocalisation du bagage peut être accessible à distance pour un utilisateur, et
**en ce que** ledit mode de fonctionnement avion desdits circuits électroniques (10) est susceptible d'être activé exclusivement
- en réponse à une action adaptée de l'utilisateur sur lesdits circuits électroniques (10), ou
- comme suite à une programmation adaptée desdits circuits électroniques (10) par l'utilisateur, préalablement à un transport du bagage (1) par avion, basée sur au moins une heure prévue de décollage.

2. Bagage (1) selon la revendication 1, **caractérisé**
**en ce que** lesdits circuits électroniques (10) comprennent au moins une entrée (12, 24), pour permettre à un utilisateur de leur transmettre des données, ainsi qu'une mémoire de stockage (28), destinée à stocker des informations relatives notamment aux dates et heures de décollage d'un ou de plusieurs vols planifiés, et
**en ce que** lesdits circuits électroniques (10) sont agencés pour désactiver ledit module de communication (24) par action sur son dispositif interrupteur à un instant t1 précédant l'heure de décollage du prochain vol planifié d'une durée Δt1 prédéfinie.

3. Bagage (1) selon la revendication 2, **caractérisé**
**en ce que** ledit module de détection (26) est également agencé pour identifier des conditions correspondant au décollage d'un avion, à un instant t2, dans ledit mode de fonctionnement avion, en effectuant des mesures espacées dans le temps, après ledit instant t1,
lesdits circuits électroniques (10) étant agencés pour réactiver momentanément ledit module de communication (24) si, après une durée Δt2 prédéfinie suivant l'heure de décollage prévue pour le prochain vol planifié, aucun décollage n'a été identifié à partir des mesures effectuées par ledit module de détection (26), de manière à rendre accessible, pour un utilisateur distant, une information relative à la position du bagage (1).

4. Bagage (1) selon la revendication 3, **caractérisé en ce que** lesdits circuits électroniques (10) sont agencés pour réactiver momentanément ledit module de communication (24) de manière périodique, après expiration de ladite durée Δt2 et jusqu'à ce qu'un décollage soit identifié, de manière à rendre accessible de manière périodique, pour un utilisateur distant, une information relative à la position du bagage.

5. Bagage (1) selon la revendication 3 ou 4, **caractérisé**
**en ce que** ladite mémoire de stockage (28) est également destinée à stocker des informations relatives aux dates et heures d'atterrissage d'un ou de plusieurs vols planifiés, et
**en ce que** lesdits circuits électroniques (10) sont agencés pour mettre ledit module de détection (26) dans un mode de veille après identification d'un décollage et jusqu'à un instant t3 précédant d'une durée Δt3 prédéfinie l'heure prévue pour l'atterrissage suivant, telle que stockée dans ladite mémoire de stockage (28), à partir duquel lesdits circuits électroniques (10) ressortent ledit module de détection (26) de son mode de veille pour que ce dernier effectue des mesures permettant d'identifier des conditions correspondant à l'atterrissage de l'avion.

6. Bagage (1) selon l'une quelconque des revendications 3 à 5, **caractérisé en ce que** lesdits circuits électroniques (10) sont agencés pour stocker la valeur de l'instant t2 auquel un décollage est identifié, dans ladite mémoire de stockage (28), et pour calculer la différence entre ledit instant t2 et la valeur attendue telle que stockée par un utilisateur dans ladite mémoire de stockage, et effectuer une estimation d'une heure modifiée pour l'atterrissage de l'avion, en référence à l'heure d'atterrissage telle que stockée par l'utilisateur dans ladite mémoire de stockage (28).

7. Bagage (1) selon la revendication 6, **caractérisé en ce que** lesdits circuits électroniques (10) sont agencés pour adapter ledit instant t3 de sortie du mode de veille dudit module de détection (26) en prenant en compte ladite estimation d'une heure modifiée pour l'atterrissage de l'avion.

8. Bagage (1) selon l'une quelconque des revendications 1 à 6, **caractérisé en ce que** ledit module de détection (26) est muni d'au moins un capteur ou d'une combinaison de capteurs pris dans le groupe comprenant un capteur de pression, un accéléromètre, un capteur de position par satellite, un capteur de température.

9. Bagage (1) selon l'une quelconque des revendications précédentes, **caractérisé en ce qu'**il comporte en outre un système de détection d'effraction (36, 38), lesdits circuits électroniques (10) étant agencés de telle manière qu'une information relative à une effraction ou tentative d'effraction du bagage (1) puisse être accessible à distance pour un utilisateur, soit dès la détection de l'effraction ou la tentative d'effraction si lesdits circuits électroniques (10) sont dans un mode de fonctionnement autre que ledit mode de fonctionnement avion, soit dès réactivation dudit module de communication (24) si l'effraction ou la tentative d'effraction intervient tandis que lesdits circuits électroniques (10) sont en mode de fonctionnement avion.

10. Bagage (1) selon l'une quelconque des revendications précédentes, **caractérisé en ce que** ledit module de communication (24) est susceptible de transmettre des messages via un réseau téléphonique de type GSM.

11. Bagage (1) selon les revendications 9 et 10, **caractérisé en ce que** lesdits circuits électroniques (10) sont agencés pour que ledit module de communication (24) émette un message à destination d'un numéro prédéfini suite à une effraction ou tentative d'effraction.

12. Bagage (1) selon l'une quelconque des revendications précédentes, **caractérisé en ce qu'**il comporte un support relié de manière amovible à ladite enveloppe (2) et portant l'ensemble desdits circuits électroniques (10) ainsi qu'une source d'énergie électrique (30) destinée à assurer le fonctionnement desdits circuits électroniques (10), la liaison entre ledit support et ladite enveloppe (2) étant verrouillée par une clé électronique.

13. Procédé de suivi d'un vol en avion pour un bagage (1) comportant une enveloppe (2), définissant un volume de chargement et, portant des circuits électroniques (10) comprenant notamment un module de géolocalisation (22) ainsi qu'un module de communication (24) comprenant un dispositif interrupteur permettant sa désactivation par un utilisateur indépendamment du reste desdits circuits électroniques, lesdits circuits électroniques (10) présentant un mode de fonctionnement avion et étant agencés pour désactiver ledit module de communication (24) dans ledit mode de fonctionnement avion, lesdits circuits électroniques (10) comprenant en outre un module de détection (26) et étant agencés pour commander ledit module de détection (26), dans ledit mode de fonctionnement avion, pour qu'il effectue des mesures espacées dans le temps d'au moins une grandeur physique, pour identifier des conditions correspondant à l'atterrissage d'un avion sur la base de ces mesures, lesdits circuits électroniques (10) étant également agencés pour réactiver automatiquement ledit module de communication (24) suite à l'identification de conditions correspondant à l'atterrissage d'un avion, lesdits circuits électroniques (10) comprenant au moins une entrée (12, 24), pour permettre à l'utilisateur de leur transmettre des données, et une mémoire de stockage (28), destinée à stocker des informations relatives notamment aux dates et heures de décollage d'un ou de plusieurs vols planifiés, le procédé étant **caractérisé par le fait qu'**il comprend les étapes consistant à:
a) assurer un fonctionnement desdits circuits électroniques (10), en dehors dudit mode de fonctionnement avion, tel qu'une information relative à la géolocalisation du bagage (1) peut être accessible à distance pour un utilisateur,
b) éventuellement saisir des données relatives à au moins un vol en avion planifié pour les stocker dans ladite mémoire de stockage (28),
c) faire passer lesdits circuits électroniques (10) dans ledit mode de fonctionnement avion en désactivant ledit module de communication (24), par action sur ledit dispositif interrupteur préalablement audit vol planifié, exclusivement
- en réponse à une action adaptée de l'utilisateur sur lesdits circuits électroniques (10), ou
- comme suite à la saisie des données de l'étape b), préalablement à un transport du bagage (1) par avion et sur la base d'au moins une heure prévue de décollage.

14. Procédé selon la revendication 13, ledit module de détection (26) étant également agencé pour identifier des conditions correspondant au décollage d'un avion dans ledit mode de fonctionnement avion, le procédé étant **caractérisé en ce qu'**il comporte l'étape supplémentaire consistant à effectuer des mesures espacées dans le temps, à partir d'un instant t1 précédant l'heure de décollage du prochain vol planifié d'une durée Δt1 prédéfinie, pour déterminer l'instant t2 du décollage effectif.

15. Procédé selon la revendication 14, **caractérisé en ce qu'**il comporte l'étape supplémentaire consistant à réactiver momentanément ledit module de communication (24) si, après une durée Δt2 prédéfinie suivant l'heure de décollage prévue pour le prochain vol planifié, aucun décollage n'a été identifié à partir des mesures effectuées par ledit module de détection (26), de manière à rendre accessible, pour un utilisateur distant, une information relative à la position du bagage (1).

16. Procédé selon la revendication 15, **caractérisé en ce qu'**il comprend l'étape supplémentaire consistant à réactiver momentanément ledit module de communication (24) de manière périodique, après expiration de ladite durée Δ t2 et jusqu'à ce qu'un décollage soit identifié, de manière à rendre accessible de manière périodique, pour un utilisateur distant, une information relative à la position du bagage (1).

## Patentansprüche

1. Gepäckstück (1), das eine Hülle (2) aufweist, die ein Ladevolumen definiert, und elektronische Kreise (10) trägt, die vor allem ein Geolokalisierungsmodul (22) sowie ein Kommunikationsmodul (24) umfassen, umfassend eine Schaltervorrichtung, die seine Deaktivierung durch den Benutzer unabhängig von den übrigen elektronischen Kreisen erlaubt, wobei die elektronischen Kreise (10) einen Flugmodus aufweisen und ferner ein Detektionsmodul (26) umfassen, das ausgebildet ist, um Messungen mindestens einer physikalischen Größe vorzunehmen und Bedingungen zu identifizieren, die auf der Basis dieser Messungen dem Landen eines Flugzeugs entsprechen, wobei die elektronischen Kreise (10) ausgebildet sind, um das Kommunikationsmodul (24) im Flugmodus zu deaktivieren und das Detektionsmodul (26) zu steuern, damit es zeitlich beabstandete Messungen durchführt, wobei die elektronische Kreise (10) ebenfalls ausgebildet sind, um das Kommunikationsmodul (24) infolge der Identifizierung von Bedingungen, die dem Landen eines Flugzeugs entsprechen, auf der Basis der Messungen automatisch zu reaktivieren,
**dadurch gekennzeichnet, dass** das Geolokalisierungsmodul (22) und das Kommunikationsmodul (24) derart ausgebildet sind, dass eine Information bezüglich der Geolokalisierung des Gepäckstücks für einen Benutzer aus der Ferne zugänglich sein kann, und
dass der Flugmodus der elektronischen Kreise (10) imstande ist, aktiviert zu sein ausschließlich
- als Antwort auf eine entsprechende Aktion des Benutzers auf die elektronischen Kreise (10), oder
- infolge einer entsprechenden Programmierung der elektronischen Kreise (10) durch den Benutzer vor einem Transport des Gepäckstücks (1) mit dem Flugzeug auf der Basis mindestens einer vorgesehenen Startzeit.

2. Gepäckstück (1) nach Anspruch 1, **dadurch gekennzeichnet,**
**dass** die elektronischen Kreise (10) mindestens einen Eingang (12, 24) umfassen, um einem Benutzer zu erlauben, ihnen Daten zu übertragen, sowie einen Speicher (28), der bestimmt ist, Informationen vor allem in Bezug auf die Tage und Uhrzeiten des Starts eines oder mehrerer geplanter Flüge zu speichern, und
**dass** die elektronischen Kreise (10) ausgebildet sind, um das Kommunikationsmodul (24) durch Aktion auf seine Schaltervorrichtung zu einem Zeitpunkt t1 vor der Uhrzeit des Starts des nächsten geplanten Flugs einer vorbestimmten Dauer Δt1 zu deaktivieren.

3. Gepäckstück (1) nach Anspruch 2, **dadurch gekennzeichnet,**
**dass** das Detektionsmodul (26) ebenfalls ausgebildet ist, um zu einem Zeitpunkt t2 im Flugmodus durch Durchführung zeitlich beabstandeter Messungen nach dem Zeitpunkt t1 Bedingungen zu identifizieren, die dem Start eines Flugzeugs entsprechen,
die elektronischen Kreise (10) ausgebildet sind, um das Kommunikationsmodul (24) momentan zu reaktivieren, wenn nach einer vorbestimmten Dauer Δt2 nach der vorgesehenen Startzeit für den nächsten geplanten Flug auf der Basis der von dem Detektionsmodul (26) durchgeführten Messungen kein Start identifiziert werden konnte, um für einen entfernten Benutzer eine Information über die Position des Gepäckstücks (1) zugänglich zu machen.

4. Gepäckstück (1) nach Anspruch 3, **dadurch gekennzeichnet, dass** die elektronischen Kreise (10) ausgebildet sind, um nach Ablauf der Dauer Δt2 und bis ein Start identifiziert wurde, das Kommunikationsmodul (24) momentan periodisch zu reaktivieren, um für einen entfernten Benutzer eine Information über die Position des Gepäckstücks zugänglich zu machen.

5. Gepäckstück (1) nach Anspruch 3 oder 4, **dadurch gekennzeichnet,**
**dass** der Speicher (28) ebenfalls vorgesehen ist, Informationen über die Tage und Uhrzeiten des Starts eines oder mehrerer geplanter Flüge zu speichern, und
**dass** die elektronischen Kreise (10) ausgebildet sind, um das Detektionsmodul (26) nach Identifizierung eines Starts und bis zu einem Zeitpunkt t3, der eine vorbestimmte Dauer Δt3 vor der für die folgende Landung vorgesehenen Uhrzeit liegt, so wie im Speicher (28) gespeichert, ab der die elektronischen Kreise (10) das Detektionsmodul (26) aus seinem Stand-by-Modus aufwecken, damit dieses Messungen durchführt, die erlauben, Bedingungen zu identifizieren, die dem Landen des Flugzeugs entsprechen, in einen Stand-by-Modus zu versetzen.

6. Gepäckstück (1) nach einem der Ansprüche 3 bis 5, **dadurch gekennzeichnet, dass** die elektronischen Kreise (10) ausgebildet sind, um den Wert des Zeitpunkts t2, zu dem ein Start identifiziert wurde, im Speicher (28) zu speichern und um die Differenz zwischen dem Zeitpunkt t2 und dem erwarteten Wert, wie von einem Benutzer im Speicher gespeichert, zu berechnen und um unter Bezugnahme auf die Landezeit, wie von dem Benutzer im Speicher (28) gespeichert, eine Schätzung einer geänderten Uhrzeit für das Landen des Flugzeugs zu berechnen.

7. Gepäckstück (1) nach Anspruch 6, **dadurch gekennzeichnet, dass** die elektronischen Kreise (10) ausgebildet sind, um den Zeitpunkt t3, zu dem das Detektionsmodul (26) den Stand-by-Modus verlässt, unter Berücksichtigung der Schätzung einer geänderten Uhrzeit für das Landen des Flugzeugs anzupassen.

8. Gepäckstück (1) nach einem der Ansprüche 1 bis 6, **dadurch gekennzeichnet, dass** das Detektionsmodul (26) mit mindestens einem Sensor oder einer Sensorenkombination, ausgewählt aus der Gruppe, die einen Drucksensor, einen Beschleunigungsmesser, einen Positionssensor via Satellit, einen Temperatursensor umfasst, ausgestattet ist.

9. Gepäckstück (1) nach einem der vorangehenden Ansprüche, **dadurch gekennzeichnet, dass** es ferner ein Einbruchdetektionssystem (36, 38) aufweist, wobei die elektronischen Kreise (10) derart ausgebildet sind, dass eine Information über einen Einbruch oder einen Einbruchversuch in das Gepäckstück (1) für einen Benutzer aus der Ferne zugänglich sein kann, entweder ab der Detektion des Einbruchs oder des Einbruchversuchs, wenn die elektronischen Kreise (10) in einem anderen Betriebsmodus als im Flugmodus sind, oder ab Reaktivierung des Kommunikationsmoduls (24), wenn der Einbruch oder der Einbruchversuch stattfindet, währenddessen die elektronischen Kreise (10) im Flugmodus sind.

10. Gepäckstück (1) nach einem der vorangehenden Ansprüche, **dadurch gekennzeichnet, dass** das Kommunikationsmodul (24) imstande ist, Nachrichten über ein Telefonnetz vom Typ GSM zu übertragen.

11. Gepäckstück (1) nach den Ansprüchen 9 und 10, **dadurch gekennzeichnet, dass** die elektronischen Kreise (10) ausgebildet sind, damit das Kommunikationsmodul (24) infolge eines Einbruchs oder eines Einbruchversuchs eine Nachricht in Richtung einer vorbestimmten Nummer sendet.

12. Gepäckstück (1) nach einem der vorangehenden Ansprüche, **dadurch gekennzeichnet, dass** es einen Halter aufweist, der lösbar mit der Hülle (2) verbunden ist und alle elektronischen Kreise (10) sowie eine Stromquelle (30) trägt, die bestimmt ist, den Betrieb der elektronischen Kreise (10) zu sichern, wobei die Verbindung zwischen dem Halter und der Hülle (2) mit einem elektronischen Schlüssel verriegelt ist.

13. Verfahren zur Nachverfolgung eines Flugs im Flugzeug für ein Gepäckstück (1), das eine Hülle (2) aufweist, die ein Ladevolumen definiert, und elektronische Kreise (10) trägt, die vor allem ein Geolokalisierungsmodul (22) sowie ein Kommunikationsmodul (24) umfassen, umfassend eine Schaltervorrichtung, die seine Deaktivierung durch einen Benutzer unabhängig von den übrigen elektronischen Kreisen erlaubt, wobei die elektronischen Kreise (10) einen Flugmodus aufweisen und ausgebildet sind, um das Kommunikationsmodul (24) im Flugmodus zu deaktivieren, wobei die elektronischen Kreise (10) ferner ein Detektionsmodul (26) umfassen und ausgebildet sind, um das Detektionsmodul (26) im Flugmodus zu steuern, damit es zeitlich beabstandete Messungen mindestens einer physikalischen Größe vornimmt, um auf der Basis dieser Messungen Bedingungen zu identifizieren, der dem Landen eines Flugzeugs entsprechen, wobei die elektronischen Kreise (10) ebenfalls ausgebildet sind, um das Kommunikationsmodul (24) infolge der Identifizierung von Bedingungen, die dem Landen eines Flugzeugs entsprechen, automatisch zu reaktivieren, wobei die elektronischen Kreise (10) mindestens einen Eingang (12, 24) umfassen, um dem Benutzer zu erlauben, ihnen Daten zu übertragen, und einen Speicher (28), der bestimmt ist, Informationen vor allem über Tage und Uhrzeiten des Startens eines oder mehrerer geplanter Flüge zu speichern, wobei das Verfahren **dadurch gekennzeichnet ist, dass** es die folgenden Schritte umfasst:
a) Sichern eines Betriebs der elektronischen Kreise (10) außerhalb des Flugmodus, so dass eine Information über die Geolokalisierung des Gepäckstücks (1) aus der Entfernung für einen Benutzer zugänglich ist,
b) eventuell Eingeben von Daten, die sich auf mindestens einen geplanten Flug im Flugzeug beziehen, um sie im Speicher (28) zu speichern,
c) Umschalten der elektronischen Kreise (10) in den Flugmodus durch Deaktivieren des Kommunikationsmoduls (24) durch Betätigen der Schaltervorrichtung vor dem geplanten Flug, ausschließlich
- als Antwort auf eine entsprechende Aktion des Benutzers auf die elektronischen Kreise (10), oder
- infolge der Eingabe der Daten in Schritt b) vor einem Transport des Gepäckstücks (1) mit einem Flugzeug und auf der Basis von mindestens einer geplanten Startzeit.

14. Verfahren nach Anspruch 13, wobei das Detektionsmodul (26) ebenfalls ausgebildet ist, um Bedingungen zu identifizieren, die dem Start eines Flugzeugs im Flugmodus entsprechen, wobei das Verfahren **dadurch gekennzeichnet ist, dass** es einen zusätzlichen Schritt aufweist, der darin besteht, ab einem Zeitpunkt t1 vor der Startzeit des nächsten geplanten Flugs einer vorbestimmten Dauer Δt1 zeitlich beabstandete Messungen durchzuführen, um den Zeitpunkt t2 des tatsächlichen Starts zu bestimmen.

15. Verfahren nach Anspruch 14, **dadurch gekennzeichnet, dass** es den zusätzlichen Schritt aufweist, der darin besteht, das Kommunikationsmodul (24) momentan zu reaktivieren, wenn nach einer vorbestimmten Dauer Δt2 nach der vorgesehenen Startzeit für den nächsten geplanten Flug auf der Basis der von dem Detektionsmodul (26) durchgeführten Messungen kein Start identifiziert wurde, um für einen entfernten Benutzer eine Information über die Position des Gepäckstücks (1) zugänglich zu machen.

16. Verfahren nach Anspruch 15, **dadurch gekennzeichnet, dass** es den zusätzlichen Schritt umfasst, der darin besteht, nach Ablauf der Dauer Δt2 und bis ein Start identifiziert wurde, das Kommunikationsmodul (24) momentan periodisch zu reaktivieren, um für einen entfernten Benutzer eine Information über die Position des Gepäckstücks (1) periodisch zugänglich zu machen.

## Claims

1. A luggage bag (1) comprising an envelope (2), defining a loading volume and bearing electronic circuits (10) comprising in particular a geolocation module (22) and a communication module (24) comprising a switch-off device allowing its deactivation by the user independently of the remainder of said electronic circuits, said electronic circuits (10) being capable of functioning in an aircraft mode and furthermore comprising a detection module (26), designed to take measurements of at least one physical quantity and to identify conditions corresponding to the landing of an aircraft on the basis of the measurements, said electronic circuits (10) being designed to deactivate said communication module (24) in said aircraft mode and to control said detection module (26) so that it performs measurements staggered over time, said electronic circuits (10) also being designed to automatically reactivate said communication module (24) subsequent to the identification of conditions corresponding to the landing of an aircraft on the basis of said measurements,
**characterized in that** said geolocation module (22) and said communication module (24) are designed in such a way that an information item relating to the position of the luggage bag may be remotely accessible to a user, and
**in that** said aircraft mode of said electronic circuits (10) can exclusively be activated
- in response to a suitable action of the user on said electronic circuits (10), or
- as the result of a suitable programming of said electronic circuits (10) by the user, prior to transport of the luggage bag (1) by aircraft, based on at least one expected takeoff time.

2. Luggage bag (1) according to Claim 1, **characterized**
**in that** said electronic circuits (10) comprise at least one input (12, 24), to allow a user to transmit data to them, as well as a storage memory (28), intended to store information items relating in particular to the dates and times of takeoff of one or more scheduled flights, and
**in that** said electronic circuits (10) are designed to deactivate said communication module (24) by action on its switch-off device at an instant t1 preceding the takeoff time of the next scheduled flight by a predefined duration Δt1.

3. Luggage bag (1) according to Claim 2, **characterized**
**in that** said detection module (26) is also designed to identify conditions corresponding to the takeoff of an aircraft, at an instant t2, in said aircraft mode, by performing measurements staggered over time, after said instant t1,
said electronic circuits (10) being designed to momentarily reactivate said communication module (24) if, after a predefined duration Δt2 following the envisaged takeoff time for the next scheduled flight, no takeoff has been identified on the basis of the measurements performed by said detection module (26), so as to render accessible, to a remote user, an information item relating to the position of the luggage bag (1).

4. Luggage bag (1) according to Claim 3, **characterized in that** said electronic circuits (10) are designed to momentarily reactivate said communication module (24) periodically, after expiry of said duration Δt2 and until a takeoff is identified, so as to render periodically accessible, to a remote user, an information item relating to the position of the luggage bag.

5. Luggage bag (1) according to Claim 3 or 4, **characterized**
**in that** said storage memory (28) is also intended to store information items relating to the dates and times of landing of one or more scheduled flights, and
**in that** said electronic circuits (10) are designed to place said detection module (26) in a standby mode after identification of a takeoff and until an instant t3 preceding by a predefined duration Δt3 the envisaged time, such as stored in said storage memory (28), for the following landing, on the basis of which said electronic circuits (10) release said detection module (26) from its standby mode so that the latter performs measurements making it possible to identify conditions corresponding to the landing of the aircraft.

6. Luggage bag (1) according to any of Claims 3 to 5, **characterized in that** said electronic circuits (10) are designed to store the value of the instant t2 at which a takeoff is identified, in said storage memory (28), and to calculate the difference between said instant t2 and the expected value such as stored by a user in said storage memory, and to perform an estimation of a modified time for the landing of the aircraft, with reference to the landing time such as stored by the user in said storage memory (28).

7. Luggage bag (1) according to Claim 6, **characterized in that** said electronic circuits (10) are designed to adapt said instant t3 of exit from the standby mode of said detection module (26) by taking into account said estimation of a modified time for the landing of the aircraft.

8. Luggage bag (1) according to any of Claims 1 to 6, **characterized in that** said detection module (26) is furnished with at least one sensor or with a combination of sensors taken from the group comprising a pressure sensor, an accelerometer, a satellite-based position sensor, a temperature sensor.

9. Luggage bag (1) according to any of the preceding Claims, **characterized in that** it furthermore comprises a break-in detection system (36, 38), said electronic circuits (10) being designed in such a way that an information item relating to a break-in or attempted break-in of the luggage bag (1) may be remotely accessible to a user, either right from the detection of the break-in or the attempted break-in if said electronic circuits (10) are in a mode of operation other than said aircraft mode, or right from reactivation of said communication module (24) if the break-in or the attempted break-in occurs while said electronic circuits (10) are in aircraft mode.

10. Luggage bag (1) according to any of the preceding Claims, **characterized in that** said communication module (24) is able to transmit messages via a telephone network of GSM type.

11. Luggage bag (1) according to Claims 9 and 10, **characterized in that** said electronic circuits (10) are further designed so that said communication module (24) emits a message destined for a predefined number subsequent to a break-in or attempted break-in.

12. Luggage bag (1) according to any of the preceding Claims, **characterized in that** it comprises a support linked in a removable manner to the said envelope (2) and carrying the assembly of said electronic circuits (10) as well as an electrical energy source (30) intended to ensure the operation of said electronic circuits (10), the link between said support and said envelope (2) being locked by an electronic key.

13. Method for tracking an aircraft flight for a luggage bag (1) comprising an envelope (2), defining a loading volume and bearing electronic circuits (10) comprising in particular a geolocation module (22) and a communication module (24) comprising a switch-off device allowing its deactivation by the user independently of the remainder of said electronic circuits, said electronic circuits (10) being capable of functioning in an aircraft mode and being designed to deactivate said communication module (24) in said aircraft mode, said electronic circuits (10) furthermore comprising a detection module (26) and being designed to control said detection module (26), in said aircraft mode, so that it performs measurements staggered over time of at least one physical quantity and to identify conditions corresponding to the landing of an aircraft on the basis of the measurements, said electronic circuits (10) also being designed to automatically reactivate said communication module (24) subsequent to the identification of conditions corresponding to the landing of an aircraft, said electronic circuits (10) comprising at least one input (12, 24), to allow a user to transmit data to them, and a storage memory (28), intended to store information items relating in particular to the dates and times of takeoff of one or more scheduled flights, the method being **characterized in that** it comprises the steps:
a) ensuring, in a mode of operation other than said aircraft mode, that said electronic circuits (10) work in such a way that an information item relating to the position of the luggage bag (1) may be remotely accessible to a user,
b) eventually inputting data relating to at least one scheduled aircraft flight so as to store them in said storage memory (28),
c) placing said electronic circuits (10) in said aircraft mode by deactivating said communication module (24), by action on said switch-off device, prior to said scheduled flight, exclusively
- in response to a suitable action of the user on said electronic circuits (10), or
- as a result of the data input of step b), prior to transport of the luggage bag (1) by aircraft and on the basis of at least one expected takeoff time.

14. Method according to Claim 13, said detection module (26) also being designed to identify conditions corresponding to the takeoff of an aircraft in said aircraft mode, the method being **characterized in that** it further comprises the additional step consisting in performing measurements staggered over time, after an instant t1 preceding the takeoff time of the next scheduled flight by a predefined duration Δt1, so as to determine the instant t2 of the actual takeoff.

15. Method according to Claim 14, **characterized in that** it comprises the additional step consisting in momentarily reactivating said communication module (24) if, after a predefined duration Δt2 following the envisaged takeoff time for the next scheduled flight, no takeoff has been identified on the basis of the measurements performed by said detection module (26), so as to render accessible, to a remote user, an information item relating to the position of the luggage bag (1).

16. Method according to Claim 15, **characterized in that** it comprises the additional step consisting in momentarily reactivating said communication module (24) periodically, after expiry of said duration Δt2 and until a takeoff is identified, so as to render periodically accessible, to a remote user, an information item relating to the position of the luggage bag (1).
